# EUROPEAN PATENT APPLICATION

(11) **EP 4 559 321 A1**
(43) Date of publication of application: **28.05.2025**
(21) Application number: 23212349.7
(22) Date of filing: 27.11.2023
(51) Int. Cl.: A23J 3/14, A23J 3/22, A23L 13/40, A23L 27/21, A23L 27/26, A23L 27/00

(54) **PLANT-BASED MEAT ANALOGUE**

(71) Applicant: Unilever IP Holdings B.V., 3013 AL Rotterdam (NL)
(72) Inventor: DENEKAMP, Ilse Maria, 6708 WH Wageningen (NL); DRAIJER, Richard, 6708 WH Wageningen (NL); HOLLEBRANDS, Boudewijn, 6708 WH Wageningen (NL)
(74) Representative: van den Brom, Coenraad Richard

(57) **Abstract**

The invention relates to a meat analogue comprising 7-36 wt.% of plant protein and 40-88 wt.% of water, said meat analogue further comprising 2-pentyl-1,3-thiazolidine-4-carboxylic acid and/or salts thereof.

The inventors have discovered that the off-flavour note in plant-based meat analogues that is caused by the presence of aldehydes, such as hexanal, can be reduced by adding cysteine during the production of these meat analogues. Cysteine is capable of reacting with off-flavour-generating aldehydes under the formation of a reaction product that does not adversely affect the flavour of the meat analogue. An important example of such a reaction product is 2-pentyl-1,3-thiazolidine-4-carboxylic acid, which is formed by the reaction between cysteine and hexanal.

The invention also relates to a method of producing a plant-based meat analogue with reduced off-flavour, said method comprising adding at least 0.001 wt.%, calculated by weight of the meat analogue, of an aldehyde scavenger, said aldehyde scavenger containing at least 5 wt.%, calculated by weight of the aldehyde scavenger, of cysteine.

## Description

### Field of the invention

The invention relates to a method of reducing off-flavour in a plant-based meat analogues, said method comprising addition of cysteine. Also provided is a meat analogue having a reduced off-flavour that can be obtained by such a method.

### Background of the invention

Meat is considered the highest quality protein source, not only due to its nutritional characteristics, but also for its appreciated taste. Meat is nutritious because meat protein contains all essential amino acids for humans. In addition, meat comprises essential vitamins, such as vitamin B12, and is rich in minerals. Meat also contains fat tissue, which greatly contributes to food acceptability by imparting specific characteristics such as appearance, texture, and mouthfeel. The fat tissue also contributes to the properties of the meat as it is prepared and cooked.

However, from a health point of view, an excessive intake of meat products cannot be recommended, especially because the fat tissue in meat contains cholesterol and a higher proportion of saturated fats.

Further, due to animal diseases such as mad cow disease, a global shortage of animal protein, growing consumer demand for religious (halal or kosher) food, and economic reasons, there is an increased interest in the consumption of non-meat proteins by consuming meat analogues instead of actual meat products.

Meat analogues are prepared such that they resemble meat as much as possible in appearance, taste and texture. Meat analogues are typically made from proteinaceous fibres of non-animal origin. Proteinaceous fibres, such as texturised vegetable protein, are characterised by having an identifiable structure and a structural integrity, such that each unit will withstand hydration, heating and other procedures used in preparing the fibres for consumption.

It is well-known to add meat flavouring during the preparation of meat analogues. Nonetheless, it remains a challenge to provide meat analogues that have a taste that closely resembles that of the original meat product. A complicating factor is the presence of off-flavour in plant-based meat analogues. This off-flavour is associated with the presence of aldehydes, such as hexanal.

Li et al. (The Flavor of Plant-based Meat Analogues, Cereal Foods World, July-August 2020, VOL. 65, NO. 4) report that soy protein isolate (SPI), the main raw material used in meat analogues, produces an undesirable off-flavour, which is a major drawback to its utilization in plant-based meat analogues. This off-flavour is described as beany, grassy, chalky, bitter. The grassy and beany flavours are formed due to peroxidation of unsaturated fatty acids.

WO 2009/102869 describes a meat analogue product comprising a combination of a dry component, a liquid, and a monovalent cationic carbonate or bicarbonate source, wherein the dry component, having a protein content, comprises a dry sulfur protein source; the liquid comprises water; and the meat analogue product comprises a plurality of striated and separable aligned fibres throughout the product.

WO 2022/175460 describes a meat substitute provided with a flavour agent coating, optionally, wherein the weight of the flavour agent coating is between 0.1% and 5% of the weight of the coated meat substitute.

### Summary of the Invention

The inventors have discovered that the off-flavour note in plant-based meat analogues that is caused by the presence of aldehydes, such as hexanal, can be reduced by adding cysteine during the production of these meat analogues.

Accordingly, a first aspect of the invention relates to a method of producing a plant-based meat analogue with reduced off-flavour, said method comprising adding at least 0.001 wt.%, calculated by weight of the meat analogue, of an aldehyde scavenger, said aldehyde scavenger containing at least 5 wt.%, calculated by weight of the aldehyde scavenger, of cysteine; wherein no reducing sugar is added or wherein reducing sugar is added in an amount that does not exceed 30% by weight of cysteine.

A second aspect of the invention relates to a plant-based meat analogue that can be obtained by the aforementioned method.

The inventors have found that that cysteine is capable of reacting with off-flavour-generating aldehydes under the formation of a reaction product that does not adversely affect the flavour of the meat analogue. An important example of such a reaction product is 2-pentyl-1,3-thiazolidine-4-carboxylic acid, which is formed by the reaction between cysteine and hexanal:

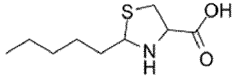

Besides hexanal, also other aldehydes that contribute to the off-flavour of plant-based meat analogues (especially 2-methylpropanal, 3-methylbutanal, 2-methylbutanal, furfural and phenylacetaldehyde) can be scavenged by cysteine.

The scavenging reaction between cysteine and aldehydes is believed to be represented by the following reaction scheme:

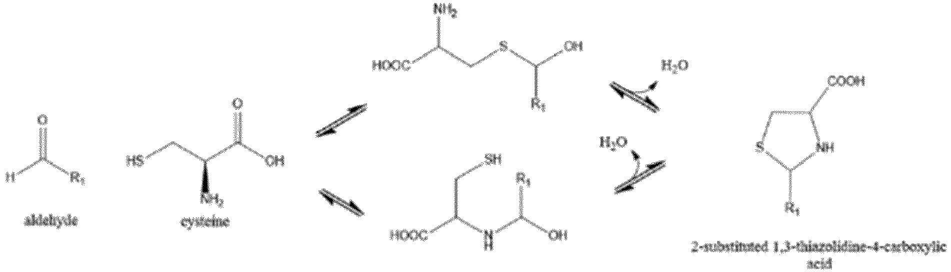

Hexanal is an aldehyde that is responsible for a significant part of the off-flavour that is caused by the presence of aldehydes in meat analogues. Indeed, the intensity of the off-flavour is strongly correlated with the hexanal content of the meat analogue. Addition of cysteine in accordance with the present invention yields a plant-based meat analogue that contains the reaction product of hexanal and cysteine, i.e., 2-pentyl-1,3-thiazolidine-4-carboxylic acid and/or salts thereof.

Accordingly, a third aspect of the invention relates to a meat analogue comprising 7-36 wt.% of plant protein and 40-88 wt.% of water, said meat analogue further comprising 2-pentyl-1,3-thiazolidine-4-carboxylic acid and/or salts thereof.

A fourth aspect of the invention relates to the use of cysteine as an off-flavour suppressor in foodstuffs containing at least 1 wt.% of plant protein.

### Detailed Description of the Invention

The terms "a" and "an" and "the" and similar referents as used herein refer to both the singular and the plural, unless otherwise indicated herein or clearly contradicted by context.

Throughout this specification and the claims which follow, unless the context requires otherwise, the word "comprise" and variations such as "comprises" or "comprising" will be understood to imply the inclusion of a stated integer or step or group of integers or steps but not the exclusion of any other integer or step or group of integers or steps.

Numerical ranges expressed in the format "from x to y" are understood to include x and y.

Whenever components A and B are said to be present in a weight ratio of x:y, what is meant is that the concentration of component A in wt.% divided by the concentration of component B in wt.% equals x:y.

Concentrations expressed as a percentage by dry weight, as mentioned herein, refer to the amount of dry ingredient present in a composition as a percentage of the total amount of dry matter contained in the same composition. Here dry matter includes all matter that is contained in the composition except for water and components having a lower boiling point than water.

The amount of dry matter in a composition or an ingredient can suitably be determined by weighing such a composition or ingredient before and after water has been removed therefrom in an autoclave.

Ratios mentioned herein are based on weight/weight, unless indicated otherwise. Similarly, all percentages are percentages by weight (w/w) unless otherwise indicated.

When multiple preferred ranges are described in the format "from x to y" for a specific feature, it should be understood that all ranges combining the different endpoints are also contemplated.

If, for a particular component, a range of 0% to y% or less than y% is recited, said ingredient may be absent.

The term "meat analogue", as used herein, refers to an edible product that does not contain animal meat but is designed to have the flavour, appearance, and mouthfeel of animal meat. The term "meat analogue" as used herein encompasses analogues of all types of meat products, such as analogues of raw meat, analogues of processed meat and analogues of cooked meat.

The term "substantially free from" as used herein means that such ingredients are not added as such for a specific functionality but can be present in trace amounts as part of a non-animal derived ingredient.

The term "vegan", as used herein, in relation to a product or an ingredient, refers to a product or an ingredient that has not been derived from animals. Meat, eggs and dairy products are examples of products that are not vegan.

The term "free amino acids", as known to the skilled person, refers to amino acids that are not part of peptides or proteins. Likewise, the term "free cysteine" refers to cysteine that is not part of a peptide or protein.

Whenever reference is made herein to "cysteine", unless indicated otherwise, the free amino acid is meant.

The term "texturised vegetable protein" or "TVP" as used herein refers to proteinaceous fibrous material that is produced by cooking an aqueous mixture of water, vegetable protein concentrate (optionally vegan protein isolates) and optionally other ingredients in an extruder cooker and extruding the mixture. The extruded material is hydrated and can be used without further hydration as hydrated non-animal protein or hydrated TVP. After extrusion, the TVP may also be cut into chunks and dried. Typical examples of dried TVP include Response^{™} TVPs from Solae (US) and Arcon^{™} TVPs from ADM (US). Such dry, irregular chunks are generally hydrated in the process of preparing a meat analogue. Some or all of the hydrated TVP may also be cut or ground for use in a meat analogue in, e.g., a meat grinder with a plate having 5 mm apertures.

The term "fat", as used herein, refers to glycerides selected from triglycerides, diglycerides, monoglycerides, phosphoglycerides and combinations thereof. The term "fat" encompasses fats that are liquid at 20 °C and fats that are solid or semi-solid at 20 °C. The melting point of a fat can be determined according to ISO 6321 (2021).

The term "cooking" as used herein in relation to the preparation of meat analogues encompasses boiling, steaming, grilling, roasting, baking and (deep)frying.

A first aspect of the invention relates to a method of producing a plant-based meat analogue with reduced off-flavour, said method comprising adding at least 0.001 wt.%, calculated by weight of the meat analogue, of an aldehyde scavenger, said aldehyde scavenger containing at least 5 wt.%, calculated by weight of the aldehyde scavenger, of cysteine.

According to a particularly preferred embodiment of the present method, no reducing sugar is added or reducing sugar is added in an amount that does not exceed 30% by weight of cysteine.

The aldehyde scavenger that is employed in the present process preferably contains 5-100 wt.% of cysteine.

In one embodiment of the invention, the aldehyde scavenger employed is highly purified and contains 50-100 wt.% of cysteine. This type of aldehyde scavenger is preferably added in an amount of 0.001-1 wt.%, more preferably 0.01-0.5 wt.% and most preferably 0.05-0.2 wt.%, calculated by weight of the meat analogue.

In another embodiment, the aldehyde scavenger contains less than 50 wt.% or even less than 30 wt.% of cysteine. Protein hydrolysate is an example of such an aldehyde scavenger. In the present method, this type of aldehyde scavenger is preferably added in an amount of at least 0.01 wt.%, more preferably in an amount of 0.05-5 wt.%, most preferably 0.1-0.5 wt.%, calculated by weight of the meat analogue.

According to a particularly preferred embodiment, the aldehyde scavenger is added in an amount providing 0.001-0.6 wt.% of cysteine, calculated by weight of the meat analogue. More preferably, the aldehyde scavenger is added in an amount providing 0.005-0.4 wt.%, most preferably 0.01-0.2 of cysteine, calculated by weight of the meat analogue.

In a preferred embodiment, the aldehyde scavenger is added to provide added cysteine in a stochiometric (molar) ratio of cysteine to aldehydes between 1:2 and 100:1, said aldehydes being selected from n-hexanal, 2-methylpropanal, 3-methylbutanal, 2-methylbutanal, furfural and phenylacetaldehyde. More preferably, said stochiometric ratio is between 1:1 and 80:1, even more preferably between 2:1 and 60:1, most preferably between 3:1 and 30:1.

If reducing sugar is added in the present method, the added amount preferably does not exceed 10% by weight of cysteine, more preferably it does not exceed 5% by weight of cysteine. Most preferably no reducing sugar is added in the present method.

According to a preferred embodiment of the present method, a source of plant protein is combined with the aldehyde scavenger. The source of plant protein preferably contains, by dry weight of the source of plant protein, 40-90 wt.%, more preferably 65-88 wt.% and most preferably 70-86 wt.% of plant protein.

The plant protein that is present in the source of plant protein is preferably selected from legume protein, cereal protein and combinations thereof. More preferably, the plant protein is selected from soy protein, pea protein, fungal protein, mung bean protein, algal protein, wheat protein, oat protein, lentil protein, faba bean protein, lupin protein and combinations thereof.

According to a particularly preferred embodiment, the plant protein comprises soy protein. More preferably, at least 50 wt.% of the protein in the meat analogue is soy protein. Most preferably, at least 70 wt.% of the protein in the meat analogue is soy protein.

Examples of sources of plant proteins that may be used include flours, proteinaceous concentrates, proteinaceous isolates and textured vegetable protein. Preferably, the source of plant protein that is combined with the aldehyde scavenger is texturised vegetable protein (TVP), more preferably hydrated TVP. The hydrated TVP preferably has a water content of 40-90 wt.%, more preferably 50-85 wt.% and most preferably 55-75 wt.%.

Preferably, the TVP is made from legume protein-containing material, in particular from soy and/or pea, sometimes in combination with wheat protein or oat protein. TVP particles can, for instance, be obtained from suppliers like Roquette^{™}, ADM^{™} and Solae^{™}.

Preferably, TVP is applied in the form of pieces of TVP. Said pieces of TVP may be ground or cut before use. For the avoidance of doubt, the term "pieces" in this context encompasses both the TVP before and after comminution.

The fat content of the TVP, by dry weight of TVP, is preferably in the range of 0-10 wt.%, more preferably in the range of 0-6 wt.% and most preferably in the range of 0-4 wt.%.

The TVP present in the meat analogue preferably contains, by dry weight of TVP, 0-15 wt.%, more preferably 0.5-12 wt.% and most preferably 1-10 wt.% of dietary fibre.

The TVP in the meat analogue of the present invention typically contains, by dry weight of TVP, 40-90 wt.%, more preferably 65-88 wt.% and most preferably 70-86 wt.% of plant protein. The plant protein preferably is selected from legume protein, cereal protein, oilseed protein and combinations thereof. More preferably, the plant protein is selected from legume protein, cereal protein and combinations thereof. Examples of legume proteins that may be used include soy protein, pea protein, lupin protein, mung bean protein, faba bean protein, lentil protein, chickpea protein and combinations thereof. Gluten is an example of cereal protein that may be contained in the TVP.

According to a particularly preferred embodiment, at least 40 wt.%, more preferably at least 80 wt.% and most preferably at least 90 wt.% of the plant protein that is present in the TVP is soy protein.

In case the present method employs TVP, the aldehyde scavenger may be combined with the TVP and/or the aldehyde scavenger may already be incorporated in the TVP during its manufacture.

In one embodiment of the present method, TVP is combined with the aldehyde scavenger. This may suitably be done by combining TVP with aqueous liquid containing the aldehyde scavenger. Besides the aldehyde scavenger this aqueous liquid may suitably contain additional ingredients, such as binding agents, fat, salt, flavouring, colouring, minerals and water-soluble vitamins.

In an alternative embodiment, the aldehyde scavenger is already introduced during manufacture of the TVP. In accordance with a preferred embodiment, this method comprises extruding a mixture comprising a source of plant protein, the aldehyde scavenger and water to produce texturised vegetable protein. The mixture comprising these components may be formed prior to extrusion or during extrusion. The present invention also encompasses embodiments in which the texturised vegetable protein by itself is a meat analogue. Vegan chicken chunks, for instance, may be prepared by extruding a mixture that, besides comprising a source of plant protein, the aldehyde scavenger and water, contains flavouring and vegetable fat.

In the present method, addition of the aldehyde scavenger preferably reduces n-hexanal concentration in the meat analogue by at least 50%, more preferably by at least 60% and most preferably by at least 70%.

According to a particularly preferred embodiment, the addition of the aldehyde scavenger preferably leads to the formation of 2-pentyl-1,3-thiazolidine-4-carboxylic acid and/or salts thereof. More preferably, addition of the aldehyde scavenger increases the concentration of 2-pentyl-1,3-thiazolidine-4-carboxylic acid and/or salts thereof by at least 0.4 mg/kg, more preferably by 1-40 mg/kg and most preferably by 2-32 mg/kg.

The addition of the aldehyde scavenger preferably increases the weight ratio of 2-pentyl-1,3-thiazolidine-4-carboxylic acid and/or salts thereof: n-hexanal by at least a factor 5, more preferably at least a factor 15 and most preferably by at least a factor 50.

At room temperature, addition of the aldehyde scavenger in accordance with the present invention achieves a very rapid reduction of the hexanal content. Preferably, a 50% reduction of the hexanal content of the meat analogue is observed within 3 hours, more preferably within 2 hours, even more preferably within 1 hour after addition of the aldehyde scavenger.

The benefits of the present method are particularly appreciated if the shaped meat analogue that is produced is a cold cuts analogue. Examples of cold cuts analogues that may suitably be prepared by the present method include ham, bresaola, chicken breast, meatloaf, roast beef, corned beef and sausages.

Another aspect of the invention relates to a meat analogue that is obtainable, more preferably that is obtained by the present method.

Yet another aspect of the invention relates to a meat analogue comprising 7-36 wt.% of plant protein and 40-88 wt.% of water, said meat analogue further comprising 2-pentyl-1,3-thiazolidine-4-carboxylic acid.

The meat analogue of the present invention preferably contains at least 0.4 mg/kg, more preferably at least 1 mg/kg, even more preferably at least 2 mg/kg and most preferably at least 3 mg/kg of 2-pentyl-1,3-thiazolidine-4-carboxylic acid and/or salts thereof.

The meat analogue contains not more than 40 mg/kg, more preferably not more than 32 mg/kg, even more preferably not more than 25 mg/kg and most preferably not more than 20 mg/kg of 2-pentyl-1,3-thiazolidine-4-carboxylic acid and/or salts thereof.

The meat analogue is preferably obtainable, more preferably obtained by the method described herein before.

Preferably, the meat analogue is substantially free of animal fat. Most preferably, the meat analogue does not contain animal fat.

Preferably, the meat analogue comprises less than 0.1 wt.% of ingredients derived from animals, more preferably less than 0.01 wt.%. Most preferably, the meat analogue does not contain any ingredients derived from animals.

Preferably, the meat analogue, according to the invention, is substantially free from heme-containing protein, more preferably it is free from heme-containing protein.

According to a particularly preferred embodiment, the meat analogue is a vegan meat analogue.

Plant protein is preferably contained in the meat analogue of the present invention in a concentration of 7-36 wt.%, more preferably of 8-30 wt.% and most preferably of 9-24 wt.%.

The meat analogue of the present invention preferably comprises, by dry weight of the meat analogue, 25-95 wt.%, more preferably 30-90 wt.% and most preferably 50-88 to wt.% of texturised vegetable protein (TVP).

According to another preferred embodiment, at least 80 wt.%, more preferably at least 90 wt.% of the plant protein that is contained in the meat analogue is provided by TVP.

The meat analogue of the present invention preferably is a cold cuts analogue. Examples of cold cuts analogues according to the invention include ham, bresaola, chicken breast, meatloaf, roast beef, corned beef and sausages.

The n-hexanal content of the meat analogue preferably does not exceed 40 mg/kg, more preferably it does not exceed 30 mg/kg, even more preferably it does not exceed 20 mg/kg, yet more preferably it does not exceed 10 mg/kg and most preferably it does not exceed 5 mg/kg. Hexanal is typically present in the meat analogue in a concentration of at least 0.1 mg/kg.

Also the concentration levels of the aldehydes butanal, 2-methylbutanal, 3-methylbutanal, 2-methylpropanal in plant-based meat analogues can be reduced by the present invention. The combination of butanal, 2-methylbutanal, 3-methylbutanal, 2-methylpropanal is preferably present in a concentration of not more than 50 mg/kg, more preferably of not more than 30 mg/kg, even more preferably of not more than 20 mg/kg, yet more preferably of not more than 10 mg/kg and most preferably of not more than 8 mg/kg. The aforementioned combination of aldehydes are typically present in a concentration of at least 1 mg/kg.

The aldehyde concentrations in meat analogues may suitably be determined by means of headspace GC-MS using spiking with known amounts of these same aldehydes.

The meat analogue preferably comprises 2-25 wt.%, more preferably 3-20 wt.%, most preferably 5-15 wt.% of fat.

The fat preferably contains at least 80 wt.%, more preferably at least 90 wt.% of an oil that is liquid at 20 °C. Examples of such liquid oils include linseed oil, castor oil, sunflower oil, soybean oil, rapeseed oil, cottonseed oil, safflower oil, flaxseed oil, rice bran oil, olive oil, tung oil, cotton seed oil, peanut oil, algal oil and mixtures thereof.

The fat component of the meat analogue preferably has a low content of saturated fatty acids. Preferably the fat contains 0-50 wt.%, more preferably 5-45 wt.% and most preferably 10-40 wt.% saturated fatty acids, calculated by weight of the total amount of fatty acids contained in the fat.

The meat analogue according to the invention preferably has a water content of 45-80 wt.%, more preferably 56-70 wt.%, most preferably 60-65 wt.% by weight of the total composition.

The meat analogue of the present invention may comprise additional ingredients besides the ones discussed above. Examples of such additional ingredients include binding agents, thickeners, emulsifiers, acidulants, preservatives, colouring, flavouring, dietary fibres, vitamins and minerals.

The meat analogue, according to the invention, preferably comprises 0.1-25 wt.%, more preferably 0.1-15 wt.%, even more preferably 0.2-11 wt.%, most preferably 0.3-7 wt.% of binding agent.

Said binding agent is used to bind other ingredients of the meat analogue, e.g., to bind textured vegetable protein particles. A suitable binding agent can be identified by titrating different binding agents against the cohesiveness and fracturability of the meat analogue. The binding agent preferably includes a gel-forming agent.

The term "gel-forming agent", as used herein, refers to a compound which is able to form a gel at the concentration, pH and salt level used in the meat analogue when heat is applied, preferably to a temperature of at least 40 °C, more preferably at least 45 °C, even more preferably at least 50 °C, still more preferably at least 60 °C, yet more preferably at least 70 °C, most preferably at least 80 °C. Such a gel-forming agent may also be referred to as a "heat-inducible gel-forming agent". Particularly preferred is a heat-inducible gel-forming agent, which is able to form a gel when heat is applied, preferably to a temperature of at least 60 °C, whereby the heat-inducible gel-forming agent comprises at least one protein. When heat is applied to a solution of a gel-forming agent, it forms a gel when, subsequent to the heating, it is cooled. The gel-forming agent is thought to form a gel by creating a network of gel-forming agents holding the water phase.

Preferably, the binding agent comprises a gel-forming protein (preferably gel-forming plant protein), a gel-forming polysaccharide or combinations thereof. The binding agent preferably comprises the combination of 0.3-7 wt.% of a gel-forming protein and 0.1-5 wt.% of a gel-forming polysaccharide like methylcellulose.

The meat analogue, according to the invention, preferably comprises an ungelatinised gel-forming agent, preferably in an amount of from 0.1-25 wt.%, more preferably 0.2-11 wt.%, even more preferably 0.3-5 wt.%, most preferably 0.5-5 wt.% by weight of the total composition.

The term "ungelatinised gel-forming agent", as used herein, refers to the gel-forming agent when it is not a gel. Such an ungelatinised gel-forming agent preferably forms a gel when the meat analogue is prepared for consumption by heating, either during heating (e.g., methylcellulose) or subsequent cooling.

The gel-forming agent is preferably present in the meat analogue as an ungelatinised gel-forming agent. The advantage thereof is that the meat analogue gets firmer during cooking, just like real meat, thereby providing the consumer with an even better meat analogue experience. This is, for instance, preferred when the meat analogue is intended as an analogue of raw meat.

The gel-forming agent may comprise a non-animal protein isolate, a non-animal protein concentrate, a non-animal polysaccharide or combinations thereof. Preferably, the non-animal gel-forming agent is derived from a plant, algae, or microbe. If the gel-forming agent is a gel-forming plant protein, preferred examples include legume protein isolates like soy protein isolate, pea protein isolate, mung bean protein isolate and other plant proteins like potato protein, RuBisCo, mung 8S globulin, a pea globulin, a pea albumin, a lentil protein, zein, or an oleosin and combinations thereof. The gel-forming agent can also be a gel-forming *Chlorella* protein.

Preferably, an ungelatinised gel-forming protein is used that is a plant protein, preferably selected from potato protein, soy protein isolate, pea protein isolate or *Chlorella* protein and is preferably present in the meat analogue in an amount of 0.1-25 wt.%, preferably 0.2-11 wt.%, even more preferably 0.3-7 wt.%, yet more preferably 0.1-9 wt.%, even more preferably 0.2-7 wt.%, still more preferably 0.3-5 wt.%, most preferably 0.5-5 wt.% by weight of the total composition.

If the gel-forming agent comprises a gel-forming polysaccharide, examples include carob bean gum, tara gum, cassia gum, gum arabic, konjac mannan gum, carrageenan, methylcellulose, xanthan gum, pectin, starch and combinations thereof.

Preferably, an ungelatinised gel-forming polysaccharide is used, preferably in an amount of from 0.1-5 wt.%, more preferably 0.2-3 wt.% by weight of the total composition. Preferably, the ungelatinised gel-forming agent comprises a combination of 1-5 wt.% methylcellulose and 0.1-7 wt.% potato protein by weight of the total composition.

In a preferred embodiment, the meat analogue comprises 0.1-20 wt.%, more preferably 0.5-10 wt.%, most preferably 1-5 wt.% of flavouring agent by weight of the total composition. Any food-grade flavouring agent to provide the desired flavour may be used. Examples include beef flavour, pork flavour, meat flavour, fish flavour, taste enhancers, yeast extract, spices, herbs, and combinations thereof.

In another preferred embodiment, the meat analogue comprises 0.01-10 wt.%, more preferably 0.05-5 wt.%, most 0.1-3 wt.% of colouring agent by weight of the meat analogue. Any food-grade colouring agent to provide the desired colour may be used. Preferred are non-animal-derived colouring agents like extracts, juices, and powders from red or orange-coloured fruits, vegetables and roots. Examples include beet, bell pepper, pomegranate, mandarin, carrot, barley malt and combinations thereof.

In yet another preferred embodiment, the meat analogue comprises 0.01-5 wt.% of NaCl, more preferably 0.05-3 wt.% of NaCl, yet more preferably 0.1-2 wt.% of NaCl, even preferably 0.3-1.7 wt.% NaCl, still more preferably 0.4-1.7 wt.% NaCl, most preferably 0.5-1.5 wt.% NaCl by weight of the total composition. In addition, part of the NaCl may be replaced by KCI or any other salt substitute suitable for consumption.

The meat analogue preferably has a pH of 5 to 6.5, more preferably a pH of 5.2 to 5.8.

A further aspect of the invention relates to the use of cysteine as an off-flavour suppressor in a foodstuff containing at least 1 wt.% of plant protein.

The foodstuff in which cysteine is applied preferably contains 5-80 wt.%, more preferably 9-30 wt.% of plant protein.

The water content of the foodstuff in which cysteine is used preferably is in the range of 40-88 wt.%. Preferably, the water content is in the range of 45-80 wt.%, more preferably of 56-75 wt.%, most preferably 60-70 wt.%.

The plant protein is preferably selected from legume protein, cereal protein and combinations thereof. More preferably, the plant protein is selected from soy protein, pea protein, fungal protein, mung bean protein, algal protein, wheat protein, oat protein, lentil protein, faba bean protein, lupin protein and combinations thereof.

According to a particularly preferred embodiment, the plant protein comprises soy protein. More preferably, at least 50 wt.% of the protein in the meat analogue is soy protein. Most preferably, at least 70 wt.% of the protein in the meat analogue is soy protein.

Preferably, the aldehyde scavenger is applied in the foodstuff in an amount providing 0.001-0.6 wt.% of cysteine, calculated by weight of the foodstuff. More preferably, the aldehyde scavenger is added in an amount providing 0.005-0.8 wt.%, most preferably 0.01-0.6 of cysteine, calculated by weight of the foodstuff.

The invention is further illustrated by the following non-limiting examples.

### Examples

### Example 1

Meat analogue doughs were prepared on the basis of the recipes shown in Table 1.

**Table 1**

| | **Parts by weight** | | | | |
|---|---|---|---|---|---|
| | **A** | **1** | **2** | **3** | **4** |
| Arcon HM4 soy TVP | 15 | 15 | 15 | 15 | 15 |
| Hydrate water | 67 | 67 | 67 | 67 | 67 |
| Methyl cellulose | 2 | 2 | 2 | 2 | 2 |
| Soy protein isolate | 5 | 5 | 5 | 5 | 5 |
| Palm fat powder | 5 | 5 | 5 | 5 | 5 |
| NaCl | 1 | 1 | 1 | 1 | 1 |
| Sunflower oil | 5 | 5 | 5 | 5 | 5 |
| Cysteine | 0 | 0.01 | 0.05 | 0.1 | 0.5 |

The doughs were prepared as follows:
- The TVP was ground to a powder
- Ground TVP, soy protein isolate water and cysteine were combined and allowed to hydrate for 30 minutes at room temperature
- Methyl cellulose and salt were added and mixed by hand for 1 minute.
- Sunflower oil and palm fat powder were added and mixed by hand for 1 minute.

Next, 1 gram of each dough was put in 20 mL HS vials in 3 replicates. Samples were kept for 3 hours at room temperature. Then, all samples were analysed by GC-MS.

The GC-MS analyses were performed on an Agilent 7890 A GC-MS system (Agilent, Amstelveen, the Netherlands) equipped with a Gerstel MPS-XL autosampler (Gerstel, Mülheim aid Ruhr, Germany) capable of head-space injections and containing a heated 2.5 mL head-space syringe. Injection was performed in the split mode with a split ratio of 25:1. The quartz liner of the injector had an internal diameter of 2 mm. Injector temperature was 200°C. The injection volume was 750 µL, both for the samples as well as for the calibration standards.

The gaseous head-space samples were injected at a rate of 1000 µL/s. The syringe temperature was kept at 50°C. Carrier gas was helium at a constant flow of 2.0 mL/min. The column was a short capillary column with an inner diameter of 150 µm, and a length of 6 m (Agilent, Middelburg, the Netherlands). It was coated with 0.3 mm of a VF-5ms stationary phase. The oven temperature program started at 45°C (0 min) and was programmed to 80°C (0 min) at 80°C/min followed by a ramp of 100°C/min to 120°C (0.16 min). To allow the system to achieve these high heating rates reproducibly, the oven was equipped with a high-speed oven-insert pillow (Agilent). MS acquisition was performed in the SIM mode, monitoring the ions m/z 56, m/z 72, and m/z 82. Ion 56 was used as quantifier ion, the other two as qualifiers.

This method is described in publication by Janssen et al. (A Fast GC-MS-Based Method for Efficacy Assessment of Natural Anti-Oxidants for Inhibiting Lipid Oxidation, Journal of AOAC INTERNATIONAL Vol. 104, No. 2, 2021**).**

The hexanal levels determined in this manner are shown in Table 2

**Table 2**

| **Hexanal content (peak surface)** | | | | |
|---|---|---|---|---|
| **A** | **1** | **2** | **3** | **4** |
| 544 | 486 | 196 | 177 | 99 |

### Example 2

Cysteine was introduced into commercially available vegan chicken chunks by adding chicken chunks in a vacuum bag together with 0.07 wt% cysteine and 2.8 wt% water. This combination was shaken thoroughly for 1 minute and vacuumized. The resulting chicken chunks were left at room temperature for 3 hours before being frozen (-20°C). During the 3 hour storage period the added cysteine and water were fully absorbed by the chicken chunks.

The next day, the samples were pulverised in liquid nitrogen in a mortar. 1 g of the powder was then put in a 20 ml headspace vial, in triplicate.

Samples were analysed by dynamic head-space Gas Chromatography with Mass Spectrometry detection (GC-MS). A Gerstel Dynamic Head-space Sampler (DHS) integrated with a Gerstel Multipurpose Sampler (MPS2-XL) and a Gerstel Thermal Desorption Unit (TDU) (Gerstel GmbH, Mülheim an der Ruhr, Germany) were used. Samples were placed in the cooled tray at 6 °C. The dynamic head-space sample preparation consisted of several subsequent steps, all automated with the Gerstel autosampler. First the sample was incubated at 40 °C for 3 minutes. This was done in the system's agitator unit which at 500 rpm (10 sec on / 1 sec off). Next, sample purging was performed at a purge flow of 30 mL/min with a total purge volume of 300 mL. Purged compounds were collected on a Tenax TA TM tube which was kept at 30 °C. The transfer-section temperature between vial and tube was 150 °C. Water removal from the Tenax TA TM tube was done by a dry purge at a temperature of 30 °C, with a drying gas volume of 300 mL at a flow rate of 30 mL/min. Analytes were desorbed from the Tenax TA TM tube in the GC-injector by programming the temperature from 30 °C (1 min) to 250 °C (5 min)) at 360 °C/min after an equilibration time of 5 min. The desorbed analytes were trapped on the GC injector-liner (CIS-4, kept at -130 °C).

The transfer from the Tenax tube was done in splitless mode at a flow rate of 50 mL/min and a transfer line temperature of 250 °C. The refocussed analytes were injected onto the GC column by heating the CIS-4 from -130 °C (01 min) to 250 °C (3 min) at 12 °C/s. The injectorwas operated in split mode with a split ratio of 1:10. The septum purge of the injector was 3 mL/min. GC analysis was performed on a Restek Rxi-5ms capillary column with a length of 60 m, an inner diameter of 0.25 mm and a film thickness of 0.5 µm (Restek, Bellefonte, PA, USA). Column temperature was programmed from 40°C (5 min) to 250°C (4 min) at 10°C/min. Carrier gas was helium at a flow rate of 1 mL/min (constant flow). The MS detector was an Agilent Technologies 5977A MSD in EI mode (70eV). The transfer line temperature was 280 °C. Ion source and quadrupole temperature were 230 °C and 150 °C, respectively. Mass spectra were scanned over the m/z range 33-250 at 3.3 spectra per second. The data was converted to .CDF files, then imported in LECO-Chromatof software. The data was processed: background removed, peaks found, peaks identified against a calibration table with 106 target components.

The results of the GC-MS analyses are shown in Table 3 (relative standard deviation (RSD) is 10-20%).

**Table 3**

| | **Peak surface** | |
|---|---|---|
| | **without cysteine** | **0.07 wt.% cysteine** |
| Acetaldehyde | 29,909 | 22,179 |
| Methylpropanal, 2- | 465,653 | 69,087 |
| Butanal | 100,645 | 11,633 |
| 3-Methylbutanal | 544,440 | 59,776 |
| 2-Methylbutanal | 584,119 | 77,337 |
| Pentanal | 405,233 | 74,764 |
| 2-Butenal, 2-methyl- | 221,875 | 46,226 |
| Trans, trans-2,4-Heptadienal | 94,867 | 72,230 |
| Hexanal | 542,249 | 134,481 |
| 2-Methyl-2-pentenal | 33,676 | 12,890 |
| Furfural | 398,176 | 170,300 |
| Hexenal, (E)-2- | 7,737 | 5,951 |
| Heptanal | 92,384 | 18,418 |
| Benzaldehyde | 1,581,239 | 1,147,055 |
| Phenylacetaldehyde | 45,988 | 5,376 |
| Nonanal | 44,469 | 22,237 |
| E-2-nonenal | 9,625 | ND* |
| 1-Penten-3-ol | 107,702 | 106,717 |
| 3-Hexanol | 37,889 | 38,661 |

| | | |
|---|---|---|
| *ND = Not detectable | | |

From the data in Table 3 it can be observed that aldehydes associated with off-flavour demonstrate a significant reduction in peak area upon cysteine treatment. In contrast the peak areas for the alcohols 1-penten-3-ol and 3-hexanol were not significantly affected by cysteine treatment. This demonstrates that the reductions in peak area can indeed be attributed to the cysteine treatment.

Analyses will show that the chicken chunks containing added cysteine, unlike the chicken chunks without added cysteine, contain a significant amount of 2-pentyl-1,3-thiazolidine-4-carboxylic acid.

### Example 3

Frozen commercially available plant-based burgers (Whopper^{®}, ex Burger King) were defrosted and cysteine was mixed through by hand (0.1% by weight of the burger). The burgers were reshaped and put in the blast freezer (-20°C). Once completely frozen, the burgers were cooked in an oven at 300°C for 4.5 minutes. Samples were served immediately.

Sensory assessment was done immediately after baking. Samples were placed on a plate with a randomized code unknown to the tasters what the code represented. The panel consisted of internally trained scientists (n=5) that blindly scored the plant-based meat analogue on meaty aroma, plant-based aroma, meaty flavour, beefy flavour, plant-based off flavour and off-flavour on a scale of 1 to 7.

The results of the assessment (average scores) are summarised in Table 4

**Table 4**

| | **Without cysteine** | **0.1 wt.% cysteine** |
|---|---|---|
| Meaty aroma | 4 | 4 |
| Plant-based aroma | 4 | 3.8 |
| Meaty flavour | 4 | 5.2 |
| Beefy flavour | 4 | 5.0 |
| Plant-based off flavour | 4 | 3.0 |
| Off-flavour | 4 | 3.6 |

### Example 4

High moisture extruded soy protein-based TVP was produced by mixing soy protein isolate and water and exposing the mixture to high temperature and pressure in a commercial extruder. Next, the extruded 'TVP ribbon' was frozen.

The frozen TVP ribbon was thawed, cut manually into approximately 4 cm pieces and blanched for 4.30 minutes at 95 ⁰C. The blanched pieces (100 grams) were put into a vacuum bag together with 2.8 grams of cysteine or water, followed by manual shaking for one minute and subsequent storage for three hours at ambient temperature. During the storage period the added cysteine solution and water was completely absorbed by the TVP pieces.. Thus, cysteine was added to these TVP pieces in concentrations of 0.0, 0.03, 0.1, 0.3 and 1 wt.%, respectively.

### Quantitative determination of 2-pentyl-1,3-thiazolidine-4-carboxylic acid

### Sample preparation

Plant-based meat pieces were refrigerated for 3 hours before sample preparation. For each sample, a precisely weighted amount (5,500-12,000 mg) of meat analogue sample was placed into separate 50 mL Falcon Tubes. Then, 25 mL of extraction solvent (1:1 mixture of ultrapure methanol and Millipore water) was added. The sample tubes were sealed and vigorously shaken by hand. They were then mixed with a vortex mixer for 30 seconds. Subsequently, the sample tubes were immersed in an ultrasonic bath for a total duration of 30 minutes. Every 10 minutes, the sample tubes were additionally shaken by hand. After removing the sample tubes from the ultrasonic bath, they were allowed to settle for 30 minutes at room temperature.

The sample concentration was standardized (22 mg/mL) through dilution with water prior to LC-MS analysis by pipetting 230-500 µL into a new 15 mL Falcon tube, and adjusting the total volume to 5 mL using high-quality water (Millipore grade). The diluted sample solutions were transferred into individual HPLC vials and were used for analysis by liquid chromatography coupled to high resolution mass spectrometry (LC-MS).

### Standard preparation

A solution of isotopically labelled hexanal D12 (hydrogens were exchanged for deuterium) in ethanol with a concentration of 6676 ppm (MW of hexanal D12 is 112 g/mol, so concentration = 59.6 mM) was prepared.

A solution of 1% L-cysteine was freshly prepared in water (MW of cysteine is 121.16 g/mol, so concentration = 82.5 mM)
An isotopically labelled 2-pentylthiazolidine-4-carboxylic acid standard was prepared by reaction of equimolar amounts of cysteine and hexanal-D12 as follows: 36 µl of cysteine 1% solution was pipetted into a 1.5 ml analytical vial. To this vial 50 µl Hexanal-D12 solution was added and 1000 µl of Millipore-grade water. This resulted into a deuterium labelled 2-pentylthiazolidine(D12)-4-carboxylic acid standard with a concentration of approximately 2.74 mM. (59.6 mM * 50/(50+36+1000)= 2.74 mM)

### LC-MS analyses

LC-MS analyses were performed using an UltiMate 3000 RS liquid chromatograph connected to a Q-Exactive Plus Hybrid Quadrupole-Orbitrap mass spectrometer (Thermo Fischer Scientific, Waltham MA, USA). A BEH C18 column (2.1 mm x 100 mm, 1.7 µm; Waters, Etten-Leur, The Netherlands) with associated VanGuard pre-column was used for the separations.

The analytes were eluted at a flow rate of 0.30 ml/min using a linear gradient of water (solvent A) and acetonitrile (solvent B) both fortified with 0.1% formic acid. The gradient was programmed as followed: 1 min at 0.1% B, in 11.5 min to 40% B, in 2.5 min to 100% B, 2.5 min at 100% B, in 0.1 min back to 0.1% B and finally re-equilibration for 4.4 min at 0.1% B. The total run time was 22 minutes. The column temperature was 40 °C, the temperature of the autosampler was 5 °C, and the injection volume was 2 µL.

The electrospray ion source was operated in alternating positive and negative mode with the following parameters: the capillary temperature was 320 °C, the heater temperature was 350 °C, the sheath gas was set to 50 arbitrary units, the auxiliary gas was set to 13 arbitrary units. The mass spectrometer was operated in full-scan MS mode. The capillary voltage was set to 3.3 kV with a S-lens RF level of 50. Calibration was achieved using Pierce Positive and Negative Ion Calibration Solution (Thermo Fischer). Data acquisition was carried out using Xcalibur 3.1.

Full scan spectra were acquired at a resolution of 35.000 in the m/z range 100-1500 using a maximum ion injection time of 100 ms.

For identification the instrument was operated in data dependent MS2 mode. From the top 10 most abundant ions ddMS2 scans were acquired at a resolution of 17.500 with an isolation window of 2 m/z whilst having the dynamic exclusion list set to 10 seconds. The maximum injection time was set to 50 ms and a normalized stepped collision energy was applied of 15, 30 and 60 arbitrary units.

The LC-MS chromatograms showed that a peak with retention time 9.3 minutes increased in signal intensity with increasing cysteine level. This peak was not present in the analytical blank samples. The signal with mass-to-charge ratio (m/z) 204.11 was also found to increase with increasing cysteine level.

### Identification

For identification of the unknown compound with m/z 204.11 and retention time 9.3 minutes, the molecular composition of the ion was calculated using the accurate mass data and isotopic patterns in the high resolution MS spectra. The formula C₉H₁₈O₂NS was assigned to m/z 204.1052. A mass error (the difference between the measured versus the predicted monoisotopic mass relative to the mass) of -0.5 ppm was calculated for this assignment which is well within the typical mass error (< 5 ppm) of the MS instrument. The simulated isotope pattern of C₉H₁₇O₂NS fully matched the experimentally determined isotope pattern.

For the assignment of the molecular formula the MS spectra were acquired in positive ionization mode, thus a protonated molecular ion is detected [M+H]+. Hence the molecular formula of the neutral molecule would be C₉H₁₇O₂NS.

This marker is a reaction product of cysteine and hexanal that has previously been reported by Bustillo Trueba, P. et al (Validation of an ultra-high-performance liquid chromatography-mass spectrometry method for the quantification of cysteinylated aldehydes and application to malt and beer samples, Journal of Chromatography A 1604, 460467 (2019)). The identity they assigned to this compound is 2-pentylthiazolidine-4-carboxylic acid, here abbreviated as PTCA.

For confirmation of this tentative identification, MS/MS spectra were acquired of the precursor ion m/z 204.10. The most intense MS/MS product ion is m/z 187.08. This product ion has been reported by Kim, H.-J. & Shin et al. (Simple derivatization of aldehydes with d-cysteine and their determination in beverages by liquid chromatography-tandem mass spectrometry, Analytica Chimica Acta 702, 225-232 (2011)).

### Confirmation of identification

A reference standard was prepared by mixing an aqueous solution of isotopically labelled hexanal (HexD12) was with an equimolar aqueous solution of cysteine.

A blank and the individual solutions of cysteine and HexD12 and the combined solution were analysed by LC-MS.

A peak with a retention time of 9.2 minutes is present in the chromatogram of the solution in which cysteine and HexD12 were combined. This peak was neither visible in the blank nor in the individual solutions of cysteine and HexD12. The experimentally determined exact mass of the compound with the retention time of 9.2 minutes was 216.1809, which matches with the m/z of the [M+H] ion of PTCA that contains 12 deuterium atoms. This is based on a calculated molecular mass of 216.18113 and a mass error of 1.1 ppm. The presence of deuterated atoms also explains the shift to a slightly shorter retention time.

A comparison of the MS/MS spectra of the deuterium labelled and unlabelled PTCA, showed similar fragmentation patterns with a mass difference of 12.075 Da. This mass difference is caused by the 12 hydrogens that were exchanged for deuterium in the isotopically labelled standard.

### Quantification of PTCA

The isotopically labelled PTCA standard was added to sample extracts of meat analogues originally formulated with 0.1 wt.% cysteine. The final concentration of PTCA-D12 in the sample extracts was 274 µM. The sample extracts spiked with PTCA-D12 were measured by the LC-MS profiling method and the peak areas of PTCA and PTCA-D12 were determined.

For quantification the assumption was made that the standards used for creating PTCA-12 were 100% pure and that the reaction had a yield of 100%.

The peak area responses of PTCA and PTCA-D12 were used for calculating the PTCA concentration in solution. The dilution factors and sample weight were used to calculate the concentration in the sample material.

The concentration of 2-pentyl-1,3-thiazolidine-4-carboxylic acid was determined according to method described above. The results are shown in Table 5.

**Table 5**

| **Added cysteine (wt.%)** | **2-pentyl-1,3-thiazolidine-4-carboxylic acid (ppm)** |
|---|---|
| 0 | 0.0 |
| 0.03 | 2.7 |
| 0.1 | 3.2 |
| 0.3 | 20 |
| 1.0 | 22 |

### Example 5

Plant-based burgers were made according to the recipes described in Table 6.

**Table 6**

| **Ingredient** | **wt.%** |
|---|---|
| Arcon t 158-125 soy TVP | 15 |
| Water | 45 |
| Methyl Cellulose | 2.2 |
| Ice-Water | 20.8 |
| Salt | 0.5 |
| Soy protein isolate | 5 |
| Citrus fibre | 1.5 |
| Sunflower oil | 5 |
| Palm oil powder | 5 |
| | **100** |

Doughs were prepared by mixing equal amounts of water or aqueous cysteine solutions with the other ingredients. The doughs so prepared contained 0.0, 0.03, 0.1, 0.3 or 1 wt.% of cysteine.

The doughs were prepared as follows:
1. Hydrate TVP with water for 30 minutes in vacuum bag
2. Add methyl cellulose to TVP in a Kenwood Mixer (mix for 30 seconds at speed 2)
3. Add ice water (mix 30 sec, speed 2)
4. Add salt, soy protein isolate and citrus fiber (mix 30 sec, speed 2)
5. Add sunflower oil and palm oil powder (mix 30 sec, speed 2)
6. Add 2.8 grams of cysteine solution or water to 100 g of dough, mix manually for 1 minute and mold dough into a burger

The burgers were kept at ambient temperature for three hours and then blast frozen for later analyses.

The concentration of 2-pentyl-1,3-thiazolidine-4-carboxylic acid was determined according to method described in Example 4. The results are shown in Table 7.

**Table 7**

| **Added cysteine (wt.%)** | **2-pentyl-1,3-thiazolidine-4-carboxylic acid (ppm)** |
|---|---|
| 0 | 0.0 |
| 0.03 | 3.7 |
| 0.1 | 8.0 |
| 0.3 | 15.9 |
| 1.0 | 25 |

## Claims

1. A meat analogue comprising 7-36 wt.% of plant protein and 40-88 wt.% of water, said meat analogue further comprising 2-pentyl-1,3-thiazolidine-4-carboxylic acid.

2. Meat analogue according to claim 1, wherein the meat analogue contains at least 0.4 mg/kg of 2-pentyl-1,3-thiazolidine-4-carboxylic acid and/or salts thereof.

3. Meat analogue according to claim 1 or 2 , wherein the meat analogue contains not more than 40 mg/kg of 2-pentyl-1,3-thiazolidine-4-carboxylic acid and/or salts thereof.

4. Meat analogue according to any one of the preceding claims, wherein n-hexanal is present in a concentration of not more than 40 mg/kg.

5. Meat analogue according to any one of the preceding claims, wherein the meat analogue comprises, by dry weight of the meat analogue, 25-95 wt.% of texturised vegetable protein (TVP).

6. Meat analogue according to any one of the preceding claims, wherein the plant protein is selected from legume protein, cereal protein and combinations thereof.

7. Meat analogue according to any one of the preceding claims, wherein the meat analogue is a cold cuts analogue.

8. A method of producing a plant-based meat analogue with reduced off-flavour, said method comprising adding at least 0.001 wt.%, calculated by weight of the meat analogue, of an aldehyde scavenger, said aldehyde scavenger containing at least 5 wt.%, calculated by weight of the aldehyde scavenger of cysteine; wherein no reducing sugar is added or wherein reducing sugar is added in an amount that does not exceed 30% by weight of cysteine.

9. Method according to claim 8, wherein the aldehyde scavenger contains at least 50 wt.% of cysteine.

10. Method according to claim 8 or 9, wherein the aldehyde scavenger is added in an amount providing 0.001-0.6 wt.% of cysteine, calculated by weight of the meat analogue.

11. Method according to any one of claims 8-10, wherein the method comprises combining a source of plant protein with the aldehyde scavenger.

12. Method according to claim 11, wherein the source of plant protein is texturised vegetable protein (TVP).

13. Method according to claim 11 or 12, wherein the source of plant protein contains, by dry weight of the source of plant protein, 50-90 wt.% of plant protein.

14. Method according to any one of claims 8-13, wherein the method produces a meat analogue according to any one of claims 1-7.

15. Use of cysteine as an off-flavour suppressor in a foodstuff containing at least 1 wt.% of plant protein.
